# EUROPÄISCHE PATENTANMELDUNG

(11) **EP 4 394 242 A1**
(43) Veröffentlichungstag der Anmeldung: **03.07.2024**
(21) Anmeldenummer: 22216977.3
(22) Anmeldetag: 28.12.2022
(51) Int. Cl.: F21S 41/63, G02B 26/08, G03B 21/14

(54) **VERFAHREN ZUR BETRIEBSOPTIMIERTEN ANSTEUERUNG EINER ABLENKEINHEIT**

(71) Anmelder: ZKW Group GmbH, 3250 Wieselburg (AT)
(72) Erfinder: Haas, Erik, 3203 Rabenstein an der Pielach (AT); Aigner, Clemens, 3100 St. Pölten (AT); Miedler, Stefan, 3105 Unterradlberg (AT)
(74) Vertreter: Patentanwaltskanzlei Matschnig & Forsthuber OG

(57) **Zusammenfassung**

Die Erfindung betrifft ein Verfahren zur betriebsoptimierten Ansteuerung einer Ablenkeinheit (2) für ein Leuchtmodul (1), wobei das Leuchtmodul (1) zur Abstrahlung einer segmentierten Lichtverteilung eingerichtet ist, wobei das Leuchtmodul (1) die Ablenkeinheit (2) umfasst, mit der eine native Auflösung des Leuchtmoduls (1) durch zumindest zeitweise Strahlablenkung mittels der Ablenkeinheit (2) visuell erhöht werden kann, wobei das Verfahren die folgenden Schritte umfasst:
a) Empfangen eines Sollbetriebssignals (2_ss), wobei das Sollbetriebssignal (2_ss) Informationen zu zumindest einem der folgenden Kriterien enthält: Sollenergieeffizienz (Esoll); Solltemperatur (Tsoll); Sollbildauflösung (Rsoll); Sollbildschärfe (Csoll); Sollreinheit (Msoll); Offset-Korrektur (Osoll);
b) Sollbetriebssignalabhängige Manipulation einer Steuergröße (2_s) der Ablenkeinheit (2), wobei das Ausmaß als auch der zeitliche Vorgang der Ablenkung durch die Ablenkeinheit (2) in Abhängigkeit von der Steuergröße (2_s) erfolgt, wobei hierzu zumindest zwei der folgenden, durch die Steuergröße (2_s) vorgegebenen Aspekte der Ablenkung, in Höhe und/oder Zeitdauer manipuliert werden: Amplitude (2_A_ist); Nulllage (2_0_ist) ; zeitliche Änderungsrate (2_dt_ist); Signalgrundform (2_F_ist); Zeitdauer zwischen den Nulllagendurchgängen (2_tp_ist)).

## Beschreibung

Die Erfindung betrifft ein Verfahren zur betriebsoptimierten Ansteuerung einer Ablenkeinheit für ein Leuchtmodul, wobei das Leuchtmodul zur Abstrahlung einer segmentierten Lichtverteilung eingerichtet ist.

Aus dem Stand der Technik sind Verfahren zur Ansteuerung von Kraftfahrzeugleuchtmodulen bekannt geworden, die eine zeitlich variable Veränderung der Lichtabstrahlung einzelner Segmente einer Lichtverteilung ermöglichen.

Zur Verbesserung der Lichtabstrahlung wurden bisher die Komponenten des betreffenden Leuchtmoduls verändert, beispielsweise, indem Komponenten eingesetzt werden, die eine höhere Auflösung, verbesserten Kontrast, erhöhte Lichtintensitäten, erhöhte Effizienz usw. ermöglichen.

Eine Aufgabe der Erfindung besteht darin, ein Verfahren zu liefern, mit dem der Betrieb eines Leuchtmoduls optimiert werden kann. Diese Aufgabe wird in einem ersten Aspekt dadurch gelöst, dass erkannt wurde, dass eine aufgabenstellungsabhängige variable Ansteuerung der Ablenkeinheit eine Möglichkeit zur Betriebsoptimierung des Leuchtmoduls bietet, und in einem zweiten Aspekt wird diese Aufgabe in weiterer Folge durch Vorsehen bestimmter technischer Merkmale und Verfahrensschritte gelöst, nämlich, indem das Leuchtmodul die Ablenkeinheit umfasst, mit der eine native Auflösung des Leuchtmoduls durch zumindest zeitweise Strahlablenkung mittels der Ablenkeinheit visuell erhöht werden kann, wobei das Verfahren die folgenden Schritte umfasst:
a) Empfangen eines Sollbetriebssignals, wobei das Sollbetriebssignal Informationen zu zumindest einem der folgenden Kriterien enthält: Sollenergieeffizienz; Solltemperatur; Sollbildauflösung; Sollbildschärfe; Sollreinheit; Offset-Korrektur;
b) Sollbetriebssignalabhängige Manipulation einer Steuergröße der Ablenkeinheit, wobei das Ausmaß als auch der zeitliche Vorgang der Ablenkung durch die Ablenkeinheit in Abhängigkeit von der Steuergröße erfolgt, wobei hierzu zumindest zwei der folgenden, durch die Steuergröße vorgegebenen Aspekte der Ablenkung, in Höhe und/oder Zeitdauer manipuliert werden: Amplitude; Nulllage; zeitliche Änderungsrate; Signalgrundform; Zeitdauer zwischen den Nulllagendurchgängen.

Die Ablenkeinheit kann in Abhängigkeit von der gewünschten Lichtintensität kontinuierlich beleuchtet oder auch in bestimmten Taktintervallen bzw. für vorgebbare Zeitdauern beleuchtet werden, beispielsweise nur dann, wenn die Auslenkeinheit eine gewünschte Position eingenommen hat.

Unter dem Ausdruck "native Auflösung" wird dabei jene Auflösung verstanden, die durch die Summe der einzeln ansteuerbaren Segmente zur Lichtabstrahlung gegeben ist. Sind z.B. die Segmente in zwei Zeilen und zwei Spalten angeordnet und einzeln ansteuerbar, so entspricht das einer nativen Auflösung von 2x2, wobei jedes einzeln ansteuerbare Segment auch als Leuchtpixel bezeichnet werden kann. Das Kraftfahrzeugleuchtmodul weist vorzugsweise eine native Auflösung von zumindest 2x2 auf, besonders bevorzugt handelt es sich um ein hochauflösendes Kraftfahrzeugleuchtmodul.

Durch die zumindest zeitweise Strahlablenkung mittels der Ablenkeinheit ist es möglich, die durch das menschliche Auge wahrgenommene Auflösung gegenüber der nativen Auflösung zu erhöhen.

Insbesondere kann vorgesehen sein, dass zum Erreichen einer aus dem Sollbetriebssignal gemäß Schritt a) abgeleiteten Sollenergieeffizienz die Zeitdauer zwischen den Nulldurchgängen manipuliert wird, und zwar so, dass in jenem Fall, in dem eine Istenergieeffizienz der Ablenkeinheit die Sollenergieeffizienz unterschreitet, die Zeitdauer zwischen den Nulllagendurchgängen erhöht wird. Je höherfrequent die Ablenkeinheit angesteuert wird, desto höher ist der Energieverbrauch und die Energieeffizienz sinkt. Die Verringerung der Frequenz ermöglich einen sparsameren Betrieb der Leuchtvorrichtung, was erneut zum Einsparen von Energie und Erhöhung der Lebensdauer des Aktuators und der dafür vorgesehenen Auslenkvorrichtung beiträgt.

Insbesondere kann vorgesehen sein, dass das Kraftfahrzeugleuchtmodul zur Abstrahlung voneinander unterschiedlicher Lichtbilder mit einer Frequenz von zumindest 60 Hz, typischerweise zwischen 60 Hz und 160 Hz eingerichtet ist, sodass unterschiedliche Sollbilder mit einer Frequenz von zumindest 30 Hz eingehen und in einzelne niedrig aufgelöste Bilder des jeweiligen Bildpaares mit einer Frequenz von zumindest 60 Hz umgewandelt und durch das Kraftfahrzeugleuchtmodul nacheinander abgestrahlt werden. Die Ablenkeinheit kann daher mit einer Frequenz von zumindest 60 Hz angesteuert werden bzw. ist die Ablenkeinheit dazu eingerichtet, ausgehend von einer beliebigen Ausgangsposition eine gewünschte Ablenkposition innerhalb von maximal 1/60 Sekunde einzunehmen.

Weiters kann vorgesehen sein, dass die Sollenergieeffizienz dergestalt vorgegeben wird, dass diese in Abhängigkeit von einer erfassten Fahrgeschwindigkeit eines das Leuchtmodul mitsamt der Ablenkeinheit umfassenden Fahrzeugs bestimmt wird, und zwar so, dass mit abnehmender Fahrgeschwindigkeit die geforderte Sollenergieeffizienz zunimmt.

Zum Beispiel in Abhängigkeit von Geschwindigkeitssensor des Automobils oder Lichtbilds. So kann beispielsweis im Standbetrieb bei einer Welcome-Projektion die Frequenz niedriger gewählt werden, als im Fahrtbetrieb da es hier zu ungewollten stroboskopartigen Effekten kommen kann.

Die Ablenkeinheit kann permanent beleuchtet werden. Alternativ dazu kann aber auch vorgesehen sein, die Ablenkeinheit nur innerhalb bestimmter Zeitintervalle zu beleuchten, z.B. getaktet und/oder nur zu Zeitpunkten, in denen die Ablenkeinheit gewisse Positionsbereiche z.B. Amplitude zu zumindest 90% erreicht. Insbesondere bei einer Bodenprojektion oder einer Welcome-Projektion kann vorgesehen sein, dass das Licht getaktet emittiert wird. Auch lassen sich visuelle Spezialeffekte mit einer getakteten Lichtquelle erzielen.

Insbesondere kann vorgesehen sein, dass zum Erreichen einer aus dem Sollbetriebssignal gemäß Schritt a) abgeleiteten Solltemperatur die Zeitdauer zwischen den Nulldurchgängen manipuliert wird, und zwar so, dass in jenem Fall, in dem eine Isttemperatur der Ablenkeinheit oder des Leuchtmoduls eine Solltemperatur überschreitet, die Zeitdauer zwischen den Nulllagendurchgängen erhöht wird.

Weiters kann vorgesehen sein, dass zum Erreichen einer aus dem Sollbetriebssignal gemäß Schritt a) abgeleiteten Sollbildschärfe die Amplitude der Ablenkung manipuliert wird, und zwar so, dass bei Vorgabe maximaler Schärfe eine maximale Amplitude vorgegeben wird, und mit abnehmender Sollbildschärfe die Amplitude reduziert wird.

Beispielsweise kann es bei einer Abblendlichtverteilung vorteilhaft sein, dass die Lichtverteilung ein Blurring aufweist. Hierzu kann der Auslenkwinkel der Ablenkeinheit reduziert werden. Auch bei Übergängen von einer Standardlichtverteilung in eine andere kann ein Blurring vorteilhaft sein.

Insbesondere kann vorgesehen sein, dass zum Erreichen einer aus dem Sollbetriebssignal gemäß Schritt a) abgeleiteten Sollbildauflösung die Amplitude der Ablenkung manipuliert wird, und zwar so, dass bei Vorgabe maximaler Sollbildauflösung eine maximale Amplitude vorgegeben wird, und mit abnehmender Sollbildauflösung die Amplitude reduziert wird.

Weiters kann vorgesehen sein, dass die Segmentierung der Lichtverteilung durch einzeln ansteuerbare Leuchtpixel realisiert ist, die in einer Matrix mit einer nativen Auflösung von zumindest zwei Zeilen und zwei Spalten weitgehend lückenlos nebeneinander angeordnet sind, wobei die maximale Amplitude der Ablenkung so gewählt ist, dass im Vergleich zu einem nicht abgelenkten Referenzzustand der abgelenkte Zustand einen vertikalen sowie einen horizontalen Versatz um eine halbe Pixelbreite aufweist, sodass bei Vorliegen der maximalen Amplitude der Ablenkung - abgesehen von Randpixeln - jedes abgelenkte Leuchtpixel mit vier nichtabgelenkten Leuchtpixeln räumlich zu je 25% überlappt. Die wahrgenommene Auflösung kann dadurch das Vierfache der nativen Auflösung betragen. Unter einem Randpixel wird ein Leuchtpixel verstanden, der nicht allseitig von weiteren Leuchtpixeln umschlossen ist, sondern zumindest an seiner Seite frei von benachbarten Leuchtpixeln ist. Es stellt damit einen Randbereich des abzustrahlenden Bildes dar.

Insbesondere kann vorgesehen sein, dass die Ablenkeinheit eine neutrale Stellung aufweist, welche die Ablenkeinheit im Falle eines Ausfalles einer Stromversorgung der Ablenkeinheit oder einer zur Steuerung der Ablenkeinheit vorgesehenen Steuergröße automatisch einnimmt. Unter einer neutralen Stellung wird jene Stellung der Ablenkeinheit verstanden, in der die keine elektrische Spannung an die Ablenkeinheit angelegt ist. Diese Stellung kann, muss sich aber nicht, von einer Nullposition unterscheiden, in der die Ablenkeinheit keine wesentliche Ablenkung des die Ablenkeinheit passierenden Lichtes bewirkt.. Für den Fall, dass der Aktuator nicht benötigt wird oder abgeschaltet werden muss, wird eine Ausgabe der Lichtfunktion dadurch weiterhin gewährleistet.

Weiters kann vorgesehen sein, dass zum Erreichen einer aus dem Sollbetriebssignal gemäß Schritt a) abgeleiteten Sollenergieeffizienz die Amplitude der Ablenkung manipuliert wird, und zwar so, dass in jenem Fall, in dem eine Istenergieeffizienz der Ablenkeinheit die Sollenergieeffizienz unterschreitet, die Amplitude der Ablenkung reduziert wird. Zudem kann durch die geringere Auslenkung im Bedarfsfall ebenso die Lebensdauer des Aktuators erhöht werden.

Insbesondere kann vorgesehen sein, dass zum Erzielen einer aus dem Sollbetriebssignal gemäß Schritt a) abgeleiteten Offset-Korrektur die Nulllage der Ablenkung manipuliert wird. Durch Fertigungs- und Bauteiltoleranzen können sich nämlich leichte Abweichungen im vorgesehenen Lichtweg ergeben. Um diesen unabhängig davon weitestgehend optimal zu gestalten, kann beispielsweise eine Offset-Korrektur durchgeführt werden, d.h. die vorgesehenen Auslenkwinkel werden derart angepasst, dass die Effekte des optimalen Auslenkungswinkels und der neutralen Position weiterhin erzielt werden.

Weiters kann vorgesehen sein, dass zum Erreichen einer aus dem Sollbetriebssignal gemäß Schritt a) abgeleiteten Sollbildschärfe die zeitliche Änderungsrate der Ablenkung manipuliert wird, und zwar so, dass in jenem Fall, in dem eine Istbildschärfe der Ablenkeinheit die Sollbildschärfe unterschreitet, die zeitliche Änderungsrate der Ablenkung erhöht wird. Das bedeutet nicht zwingend eine Frequenzerhöhung, sondern ist auch dadurch erreichbar, dass die Flanken, die zwei Endpositionen miteinander verbinden, steiler sind und die Endpositionen dadurch bei gleichbleibender Zeitdauer des gesamten Arbeitstaktes zeitlich länger gehalten werden können. Je schneller die Aktuatorbewegung bzw. die Positionsänderung des ablenkenden Elements der Ablenkeinheit durchgeführt wird, umso schärfer wird das Bild, je langsamer umso mehr werden die Übergänge zwischen dem ersten Frame und dem zweiten Frame miteinander "vermischt".

Beispielsweise kann es bei einer Abblendlichtverteilung vorteilhaft sein, dass die Lichtverteilung ein Blurring, also eine Glättung zwischen dem visuell wahrnehmbaren Licht benachbarter Pixel, aufweist. Sollte dies nötig sein, kann der Auslenkwinkel reduziert werden. Auch bei Übergängen von einer Standardlichtverteilung in eine andere kann ein Blurring vorteilhaft sein.

Insbesondere kann vorgesehen sein, dass zum Erreichen einer aus dem Sollbetriebssignal gemäß Schritt a) abgeleiteten Sollreinheit der Ablenkeinheit die zeitliche Änderungsrate der Ablenkung manipuliert wird, und zwar so, dass bei Unterschreiten einer Sollreinheit die zeitliche Änderungsrate der Ablenkung zumindest vorübergehend erhöht wird. Verunreinigende Partikel werden durch die verstärkte mechanische Bewegung innerhalb der Ablenkeinheit von dieser losgelöst.

Das Leuchtmodul ist vorzugsweise für den Einsatz in einer Kraftfahrzeugleuchte, insbesondere einer Signallichtleuchte oder eines Kraftfahrzeugscheinwerfers konzipiert. Demnach kann das Leuchtmodul auch Teil der genannten Vorrichtungen sein.

Es sei an dieser Stelle erwähnt, dass die genannten einzelnen Funktionen bzw. Optimierungsaufgaben auch gewichtet bzw. hierarchisch gegliedert werden können. Wenn z.B. die Funktion der Ablenkeinheit wegen dem Erreichen zu hoher Temperaturen gefährdet ist, könnten die Temperaturanforderungen höher gewichtet werden als Anforderungen, die in Abhängigkeit von der Fahrgeschwindigkeit festgelegt werden. Die höchsten Gewichtungen können dabei alle sicherheitsrelevanten Anforderungen haben. Wenn bspw. die Solltemperatur reduziert werden soll (z.B. durch Verringerung der Ablenkfrequenz oder Senkung der Amplitude) und gleichzeitig Staub/Schmutz über einem zulässigen Grenzwert detektiert wird (was durch Erhöhung der Ablenkfrequenz bekämpft werden könnte). In diesem Fall wird die Anforderung an die Solltemperatur höher gewichtet, da eine zu hohe Temperatur zu einem irreparablen Defekt der Ablenkeinheit führen kann.

Die Information des Sollbildes kann auch Informationen über die Solllichtintensität der einzelnen Bildpunkte des Bildes enthalten. Diese Information kann an die Lichtquelle des Kraftfahrzeugleuchtmoduls weitergegeben und durch diese umgesetzt werden.

Weiters kann vorgesehen sein, dass die Ablenkeinheit eine Glasplatte umfasst, die um zumindest eine, vorzugsweise genau eine Achse oder genau zwei Achse verschwenkbar oder verschiebbar ausgebildet ist.

Insbesondere kann vorgesehen sein, dass die Glasplatte eine plane Lichteintrittsfläche und eine hierzu planparallele Lichtaustrittsfläche aufweist, wobei die Ablenkeinheit je Achse, um die die Glasplatte verschwenkbar ist, zumindest eine elektrische Spule aufweist, wobei auf der Glasplatte für jede Spule je ein Mittel zur magnetischen Kopplung mit der jeweiligen Spule angeordnet ist, sodass durch Bestromung der jeweiligen Spule eine Kraft auf das zugehörige Mittel ausübbar ist, und zwar so, dass die Glasplatte in Abhängigkeit von der Bestromung der Spule um die jeweilige Achse geschwenkt wird. Die Glasplatte ist dabei im Strahlengang des Leuchtmoduls angeordnet. Die Lichtablenkung erfolgt durch Lichtbrechung beim Ein- und Austritt aus der Glasplatte.

Weiters kann vorgesehen sein, dass die Ablenkeinheit zudem je Achse, um die die Glasplatte verschwenkbar ist, ein mechanisches Rückstellelement, insbesondere ein Federelement, zur Rückstellung der Glasplatte in eine neutrale Stellung aufweist, die die Glasplatte im Falle eines Ausfalles einer Stromversorgung der Ablenkeinheit oder einer zur Steuerung der Ablenkeinheit vorgesehenen Steuergröße automatisch einnimmt. Natürlich können auch zwei oder mehr Rückstellelemente pro Achse vorgesehen sein.

Weiters betrifft die Erfindung ein Leuchtmodul für eine Kraftfahrzeugleuchte, wobei das Leuchtmodul zur Abstrahlung einer segmentierten Lichtverteilung eingerichtet ist, wobei das Leuchtmodul eine Ablenkeinheit umfasst, mit der eine native Auflösung des Leuchtmoduls durch zumindest zeitweise Strahlablenkung mittels der Ablenkeinheit visuell erhöht werden kann, wobei das Leuchtmodul zur Umsetzung des erfindungsgemäßen Verfahrens.

Sämtliche im Verfahren genannte Vorrichtungsmerkmale können sofern nicht anders angegeben auch Teil des Leuchtmoduls bilden. Auch können in umgekehrter Weise sämtliche in Zusammenhang mit dem Leuchtmodul genannten Vorrichtungsmerkmale Teil des zuvor beschriebenen Verfahrens bilden. Das Leuchtmodul kann sowohl eine Signalleuchte als auch einen Kraftfahrzeugscheinwerfer betreffen. Das Leuchtmodul ist vorzugsweise für den Einsatz in einer Kraftfahrzeugleuchte, insbesondere in einer Signallichtleuchte oder in einem Kraftfahrzeugscheinwerfer konzipiert. Demnach kann das Leuchtmodul auch Teil der genannten Vorrichtungen sein.

Die Erfindung ist im Folgenden anhand einer beispielhaften und nicht einschränkenden Ausführungsform näher erläutert, die in den Figuren veranschaulicht ist. Darin zeigt
Figur 1a eine Seitenansicht auf eine schematische Darstellung eines Leuchtmoduls zum Einsatz im Zusammenhang mit der vorliegenden Erfindung,
Figur 1b die Seitenansicht gemäß Fig. 1a mit einer verkippten Ablenkeinheit,
Figur 1c eine Draufsicht auf das Leuchtmodul in der Position gemäß Fig. 1b,
Figur 2a eine schematische Darstellung einer ersten Ausführungsform einer Ablenkeinheit,
Figur 2b eine schematische Darstellung einer zweiten Ausführungsform einer Ablenkeinheit,
Figur 2c eine schematische Darstellung einer dritten Ausführungsform einer Ablenkeinheit,
Figur 3 ein Diagramm, in dem der statische Zusammenhang zwischen Spulenstrom und Auslenkung einer typischen Ablenkeinheit, wie sie für die Erfindung eingesetzt werden kann, gezeigt ist,
Figur 4 eine Darstellung zweier Lichtverteilungen, die zeitlich nacheinander mittels einem Leuchtmodul gemäß der Erfindung abstrahlbar sind,
Figur 5 ein Blockschaltbild bezüglich einzelner möglicher Komponenten der Erfindung,
Figur 6 eine Darstellung eines ersten zeitlichen Verlaufes von Auslenkungen einer Ablenkeinheit, die in der vorliegenden Erfindung eingesetzt werden kann,
Figur 7 eine Darstellung eines zweiten zeitlichen Verlaufes von Auslenkungen einer Ablenkeinheit, die in der vorliegenden Erfindung eingesetzt werden kann, und
Figur 8 eine Darstellung eines zweiten zeitlichen Verlaufes von Auslenkungen einer Ablenkeinheit, die in der vorliegenden Erfindung eingesetzt werden kann.

In den folgenden Figuren bezeichnen - sofern nicht anders angegeben - gleiche Bezugszeichen gleiche Merkmale.

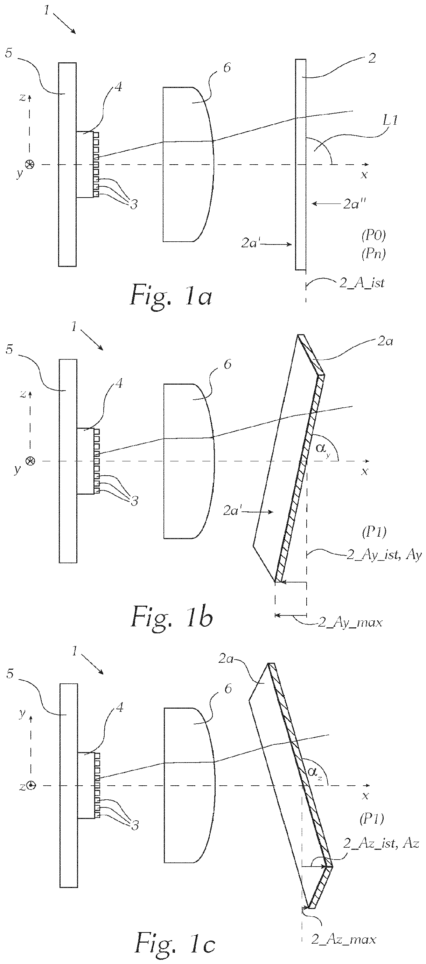

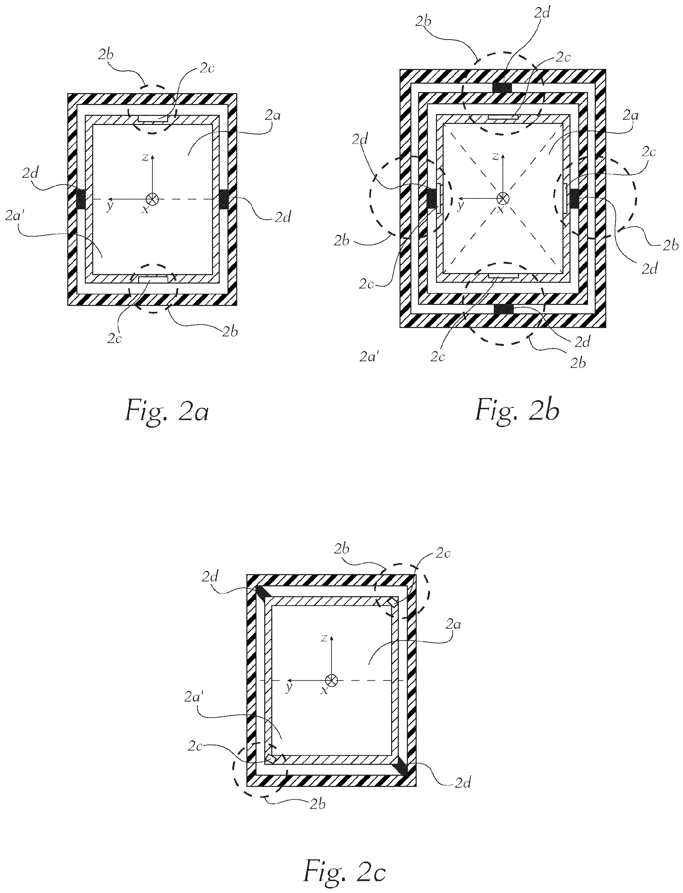

Figur 1a zeigt eine Seitenansicht auf eine schematische Darstellung eines Leuchtmoduls 1 zum Einsatz im Zusammenhang mit der vorliegenden Erfindung. Das Leuchtmodul 1 ist zur Abstrahlung einer segmentierten Lichtverteilung eingerichtet. Es umfasst hierzu eine Lichtquelle 4, die z.B. eine Matrix aus einzeln ansteuerbaren LEDs umfasst, wobei jede LED einem Segment einer abstrahlbaren Lichtverteilung zugeordnet ist und ein Leuchtpixel 3 der Lichtverteilung bildet. Natürlich können auch andere Lichtquellen oder Lichtquellsysteme eingesetzt werden, die zur Erzeugung einer segmentierten Lichtverteilung geeignet sind. Die Lichtquelle ist typischerweise auf einem Schaltungsträger 5, insbesondere auf einem PCB, angeordnet. Das von der Lichtquelle 4 abgestrahlte Licht kann z.B. ein optisches Bauelement 6, beispielsweise eine Aufweitungsoptik, passieren, bevor dieses dann in eine Ablenkeinheit 2 eintritt. Typischerweise wird durch die Anzahl der einzeln ansteuerbaren Lichtbereiche der Lichtquelle 4 eine native Auflösung festgelegt. Weist die Lichtquelle 4 z.B. 100 einzeln ansteuerbare LEDS auf, die in einer Matrix von 10 Spalten und 10 Reihen angeordnet sind, ergeben sich daraus 100 Segmente bzw. eine native Auflösung von 10x10. Die Ablenkeinheit 2 ist dazu eingerichtet, von der Lichtquelle 4 abgestrahlte Lichtstrahlen L1 abzulenken. Hierzu kann vorgesehen sein, dass die Ablenkeinheit 2 eine Glasplatte 2a umfasst, die um zumindest eine Achse verschwenkbar oder verschiebbar ausgebildet ist. Nähere Informationen hierzu werden noch nachfolgend im Zusammenhang mit Figuren 2a bis 2c erörtert.

In Fig. 1a bis 1c ist erkennbar, dass die Strahlablenkung durch die Ablenkeinheit 2 z.B. durch Brechung des Lichts bei Ein- und Austritt aus der Ablenkeinheit 2 erfolgt. Genauer gesagt wird das Licht an einer Lichteintrittsfläche 2a' sowie an einer Lichtaustrittsfläche 2a" der Glasplatte 2a gebrochen. Dadurch wird das austretende Licht gegenüber dem Lichtpfad des eintretenden Lichts versetzt. Der Lichtstrahl L1 wird also abgelenkt. Diese Ablenkung wird bei der vorliegenden Erfindung dazu genutzt, eine native Auflösung des Leuchtmoduls 1 durch zumindest zeitweise Strahlablenkung mittels der Ablenkeinheit 2 visuell zu erhöhen. Dies wird durch zeitlich veränderliche Ablenkung mittels der Ablenkeinheit 2 erzielt, und zwar typischerweise mit einer Geschwindigkeit, die so hoch gewählt ist, dass für das menschliche Auge nacheinander abgestrahlte Lichtverteilungen, die sich zumindest durch unterschiedliche Positionen der Ablenkeinheit 2 hinsichtlich der Lage der einzelnen Segmente voneinander unterscheiden, wie eine gemeinsame Lichtverteilung mit entsprechend höherer wahrnehmbarer Auflösung wahrgenommen werden. Die Frequenz beträgt dabei vorzugsweise zumindest 60 Hz.

Zur besseren Übersicht wurde in einigen Figuren ein kartesisches Koordinatensystem eingezeichnet, das so gewählt wurde, dass die x-Achse mit einer Hauptabstrahlrichtung (im Falle eines Fahrzeugscheinwerfers typischerweise die Vorwärtsfahrtrichtung eines Fahrzeuges) zusammenfällt, die y-Achse orthogonal dazu und horizontal orientiert ist, und die z-Achse vertikal orientiert ist und dadurch rechtwinkelig zu der durch die x- und y-Achse aufgespannten Ebene orientiert ist. Im vorliegend gezeigten Ausführungsbeispiel gemäß Fig. 1a bis 1c ist die Glasplatte 2a um zwei Achsen schwenkbar, nämlich um die y-Achse (siehe Fig. 1b) sowie um die z-Achse (siehe Fig. 1c).

Fig. 1a zeigt die Glasplatte 1a in einem nicht abgelenkten Referenzzustand P0, der in dem vorliegenden Beispiel mit einer neutralen Stellung Pn zusammenfällt. Diese zwei Stellungen können aber auch voneinander abweichen. Die Ablenkeinheit 2 kann also eine neutrale Stellung Pn aufweisen, die die Ablenkeinheit 2 im Falle eines Ausfalles einer Stromversorgung der Ablenkeinheit 2 oder einer zur Steuerung der Ablenkeinheit 2 vorgesehenen Steuergröße 2_s automatisch einnimmt. Eine Amplitude 2_A_ist der Ablenkung ist in der Position gemäß Fig. 1a gleich Null.

Wie bereits erwähnt, kann vorgesehen sein, dass die Segmentierung der Lichtverteilung durch einzeln ansteuerbare Leuchtpixel 3 realisiert ist. Vorzugsweise sind diese in einer Matrix mit einer nativen Auflösung von zumindest zwei Zeilen und zwei Spalten weitgehend lückenlos nebeneinander angeordnet. Eine maximale Amplitude 2_Ay_max (siehe Fig. 1b) und/oder 2_Az_max (siehe Fig. 1c) der Ablenkung so gewählt ist, dass im Vergleich zu einem nicht abgelenkten Referenzzustand P0 der abgelenkte Zustand P1 einen vertikalen sowie einen horizontalen Versatz um eine halbe Pixelbreite aufweist, sodass bei Vorliegen der maximalen Amplitude der Ablenkung - abgesehen von Randpixeln - jedes abgelenkte Leuchtpixel 3 (aus einer Sicht nach Durchtritt durch die Ablenkeinheit 2) mit vier nichtabgelenkten Leuchtpixeln räumlich zu je 25% überlappt.

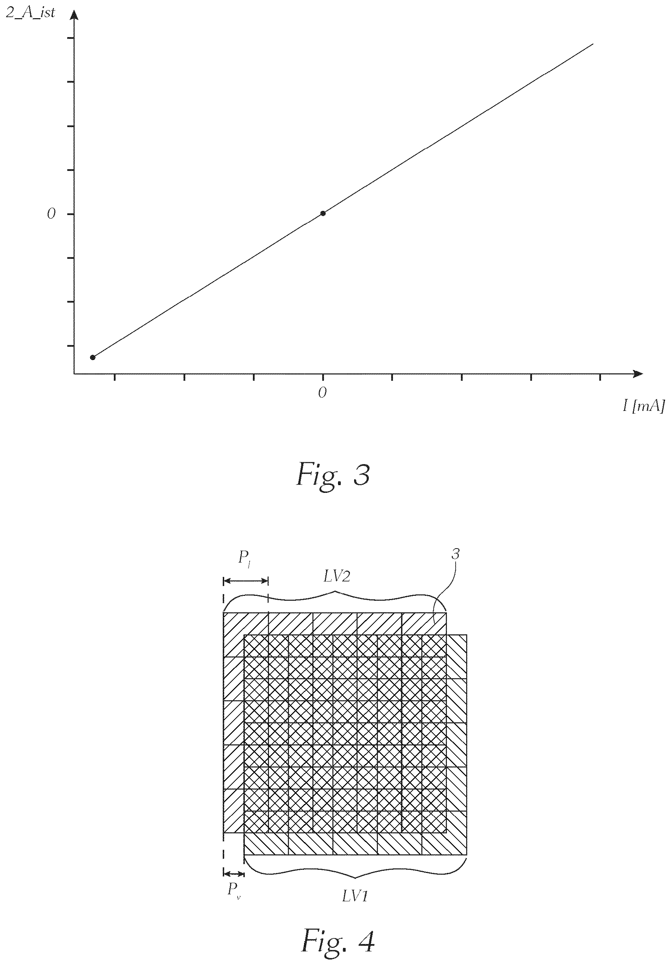

Fig. 1b zeigt die Seitenansicht gemäß Fig. 1a mit einer verkippten Ablenkeinheit 2. Die Ablenkeinheit 2 bzw. die Glasplatte 2a ist dabei um den Winkel α_{y} um die y-Achse verschwenkt worden, woraus der Amplitude der Ablenkung 2_Ay_ist resultiert. Der Wert von 2_Ay_ist ist dabei etwas geringer als die maximale Ablenkung in diese Richtung, nämlich 2_Ay_max, sodass die maximale Erhöhung der wahrnehmbaren Auflösung gerade noch nicht erfolgt, wie anhand von Fig. 4 erkennbar ist. Die Verschiebung Pᵥ eines Pixels 3 eines nachgeordneten Bildes bzw. einer nachgeordneten segmentierten Lichtabstrahlung unterschreitet dabei die halbe Seitenlänge Pₗ eines Pixels 3. Erst wenn die Verschiebung Pᵥ (sowohl aufwärts als auch seitlich) der Leuchtpixel 3 den halben Betrag der Seitenlänge Pi eines Pixels 3 beträgt, wird die maximale Erhöhung der wahrnehmbaren Auflösung erreicht.

Figur 1c zeigt eine Draufsicht auf das Leuchtmodul 1 in der Position gemäß Fig. 1b. Die Glasplatte 2a ist dabei um den Winkel α_{z} um die z-Achse verschwenkt worden, woraus der Amplitude der Ablenkung 2_Az_ist resultiert. Der Wert von 2_Az_ist ist dabei etwas geringer als die maximale Ablenkung in diese Richtung, nämlich 2_Az_max, sodass auch hier die maximale Erhöhung der wahrnehmbaren Auflösung gerade noch nicht erfolgt.

Figur 2a zeigt eine schematische Darstellung einer ersten Ausführungsform einer Ablenkeinheit 2. Die Ablenkeinheit 2 umfasst dabei die bereits erwähnte Glasplatte 2a sowie zwei mechanische Rückstellelemente 2d, insbesondere Federelemente 2b in Form von Drehfedern, die entlang der y-Achse angeordnet sind und dadurch ein Schwingen der Glasplatte 2a um die y-Achse ermöglichen. Normal zur y-Achse, und zwar entlang der z-Achse, sind zwei elektrische Spulen 2b angeordnet, die einen Teil der Ablenkeinheit 2 bilden. Die Spulen 2b sind bestrombar und zur Ausübung einer magnetischen Kraft auf ein an der Glasplatte dazu korrespondierend angeordnetes Mittel 2c zur magnetischen Kopplung, beispielsweise eines Magneten, eingerichtet.

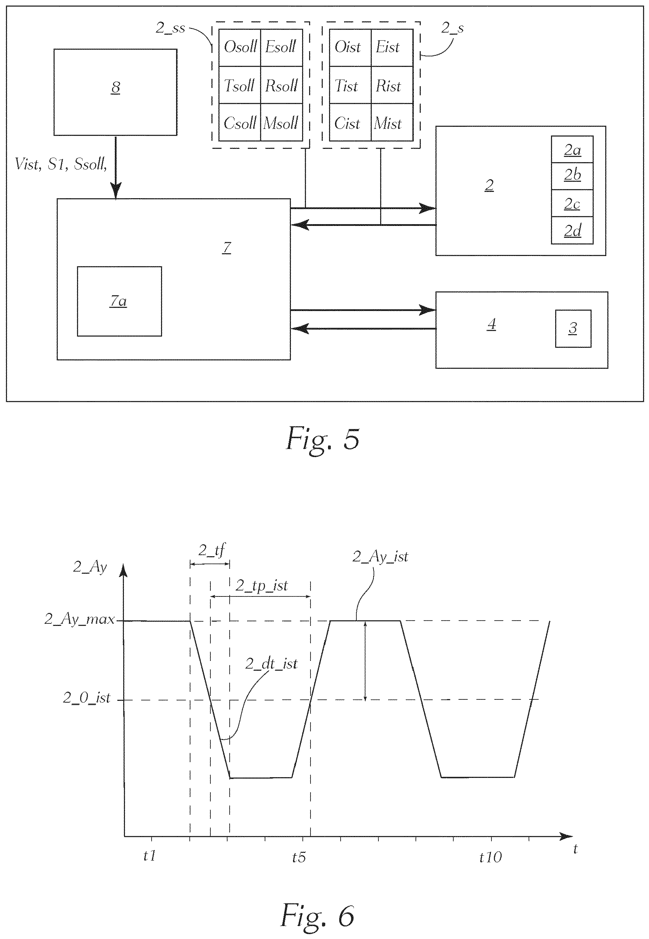

Anders ausgedrückt kann gesagt werden, dass die Glasplatte 2a eine plane Lichteintrittsfläche 2a' und eine hierzu planparallele Lichtaustrittsfläche 2a" (siehe Fig. 1a) aufweist, wobei die Ablenkeinheit 2 je Achse, um die die Glasplatte 2a verschwenkbar ist, zumindest eine elektrische Spule 2b aufweist, wobei auf der Glasplatte 2a für jede Spule 2b je ein Mittel 2c zur magnetischen Kopplung mit der jeweiligen Spule 2b angeordnet ist, sodass durch Bestromung der jeweiligen Spule 2b eine Kraft auf das zugehörige Mittel 2c ausübbar ist, und zwar so, dass die Glasplatte 2a in Abhängigkeit von der Bestromung der Spule 2b um die jeweilige Achse geschwenkt, insbesondere gedreht, wird. Je Achse, um die die Glasplatte 2a verschwenkbar ist, ist ein mechanisches Rückstellelement 2d, insbesondere ein Federelement, zur Rückstellung der Glasplatte 2a in eine neutrale Stellung Pn vorgesehen, die die Glasplatte 2a im Falle eines Ausfalles einer Stromversorgung der Ablenkeinheit 2 oder einer zur Steuerung der Ablenkeinheit 2 vorgesehenen Steuergröße 2_s (siehe Fig. 5) automatisch einnimmt. Ergänzend oder alternativ zu dieser Art der elektromechanischen Kraftübertragung können auch entsprechend gekoppelte Piezoaktuatoren eingesetzt werden.

Figur 2b zeigt eine schematische Darstellung einer zweiten Ausführungsform einer Ablenkeinheit 2. Anders als in Fig. 2a ist die Glasplatte 2a darin um zwei Achsen, nämlich die Achsen y und z, schwenkbar. Auch hier sind entlang der Schwenkachsen Rückstellelemente 2d angeordnet. Dazwischen sind jeweils Spulen 2b sowie Kopplungsmittel 2c angeordnet. Diese Ausführungsform ein Verschwenken mit zwei Freiheitsgraden, d.h. die Ablenkung um die Achse y erfolgt unabhängig von der Ablenkung um die Achse z und umgekehrt. Es lassen sich dadurch auch diagonale Ablenkungen - durch Ablenkung um beide Achsen - erzielen.

Figur 2c zeigt eine schematische Darstellung einer dritten Ausführungsform einer Ablenkeinheit 2. Hier ist die Aufhängung des Glasplatte 2a so gewählt, dass eine Ablenkung bereits diagonal zu den Achsen y und z erfolgt. D.h. die Ablenkachse liegt quer zu diesen beiden Achsen y und z. Trotz des Umstands, dass die Anzahl der Freiheitsgrade der Ablenkung vorliegend nur eins beträgt, ist aufgrund dieser Wahl der Ablenkachse eine Ablenkung möglich, die eine Erhöhung der visuell wahrnehmbaren Auflösung gegenüber der nativen Auflösung um den Faktor vier ermöglicht.

Figur 3 zeigt ein Diagramm, in dem der statische Zusammenhang zwischen Spulenstrom und Auslenkung einer typischen Ablenkeinheit 2, wie sie für die Erfindung eingesetzt werden kann, gezeigt ist. Darin ist für den statischen Fall ein linearer Zusammenhang zwischen Strom und Auslenkung zu erkennen. Die Auslenkung 2_A_ist ist dabei proportional zu dem in die Spulen 2b eingeprägten Strom I. Im dynamischen Betrieb werden natürlich die Massenträgheit des Glasplättchens 2a, etwaige Trägheiten der Rückstellelemente 2d, induktive Effekte der Spulen 2d etc. berücksichtigt. Die Fachperson ist dabei in der Lage, entsprechende Steueralgorithmen zur Ansteuerung der Spulen 2b zu realisieren, um die gewünschten Positionen der Glasplatte 2a des Ablenkelements 2 zu jedem Zeitpunkt zu erreichen.

Figur 4 zeigt eine Darstellung zweier Lichtverteilungen LV1 und LV2, die zeitlich nacheinander mittels einem Leuchtmodul 1 gemäß der Erfindung abstrahlbar sind. Die Lichtverteilungen umfassen dabei jeweils 5x5 Pixel, die über- und nebeneinander gereiht gemeinsam ein Quadrat bilden. Das der zweiten Lichtverteilung LV2 zugeordnete Quadrat ist dabei in Bezug auf das der ersten Lichtverteilung LV1 zugeordnete Quadrat um etwas weniger als eine halbe Pixellänge Pi versetzt, und zwar sowohl in horizontaler als auch in vertikaler Richtung. Es ist dabei erkennbar, dass die Leuchtpixel einander überlappen und in jenem Bereich, in dem sich die Quadrate überlappen, der Eindruck entsteht, dass die Anzahl der Leuchtpixel nun vierfach erhöht ist, da jedes Leuchtpixel in vier unterschiedliche überlappende Bereiche geteilt ist. Durch unmittelbar zeitlich aufeinanderfolgende Abstrahlung der Lichtverteilung LV1 und LV2 entsteht daher ein visueller Eindruck einer wahrnehmbaren Auflösung, die deutlich gegenüber der nativen Auflösung (vorliegend 5x5) des Leuchtmoduls erhöht ist. Der Eindruck der Erhöhung der wahrnehmbaren Auflösung ist maximal, wenn der Versatz der Leuchtpixel ½ Pixellänge Pₗ beträgt.

Figur 5 zeigt ein Blockschaltbild bezüglich einzelner möglicher Komponenten der Erfindung. Darin ist erkennbar, dass die Leuchtpixel 3 der Lichtquelle 4 zugeordnet sind, die von einer Steuereinheit 7 angesteuert werden. Die Steuereinheit 7 umfasst eine Berechnungseinheit 7a, die z.B. in Abhängigkeit von einem eingehenden Bildsignal S1 die Ansteuerung der Lichtquelle 4 vornimmt, und zwar so, dass entsprechend eines durch das Bildsignal S1 vorgegeben Bildes, auch Sollbild Ssoll genannt, jene Segmente bzw. Leuchtpixel 3 angesteuert werden, sodass das durch das Bildsignal S1 vorgegebene Bild möglichst getreu abgebildet wird. Insbesondere in jenen Fällen, in denen das vorgegebene Bild eine Auflösung aufweist, die die native Auflösung des Leuchtmoduls 1 übersteigt, so kann durch gezielte Berechnung unterschiedlicher Lichtverteilungen LV1 und LV2 sowie Anpassung/Berechnung der den jeweiligen Lichtverteilungen zugehörigen Ablenkpositionen, z.B. Pn, P0, P1, durch Überlagerung der unterschiedlichen Lichtverteilungen ein visueller Eindruck geschaffen werden, der dem vorgegebenen Sollbild Ssoll möglichst gut gleicht. Das Bildsignal S1 kann der Steuereinheit 7 über eine Datenquelle 8 zugeführt werden.

Bei der Ansteuerung der Ablenkeinheit 2 bestehen gewisse Freiheitsgrade. Grundsätzlich geht eine erhöhte Frequenz der Ablenkung der Glasplatte 2a sowie eine größere Amplitude der Ablenkung mit einem erhöhten Energieverbrauch und Verschleiß der daran beteiligten elektromechanischen Komponenten einher. Abhängig davon, wie genau das Sollbild Ssoll reproduziert werden soll sowie auch davon, ob ev. weitere Funktionen wie z.B. ein Blurring auf das Sollbild Ssoll angewendet werden soll, kann gezielt in die Berechnung der Ablenkung mittels der Ablenkeinheit 2 eingegriffen werden, wie in Zusammenhang mit den Figuren 6 bis 8 noch näher erörtert wird. Hierzu wird der Steuereinheit 7 ein Sollbetriebssignal 2_ss geliefert, das Auskunft darüber gibt, wie genau das Sollbild Ssoll abgebildet werden soll, ob dabei andere Randbedingungen wie z.B. Vorgaben zu Sollenergieeffizienz Esoll, Solltemperatur Tsoll, Sollbildauflösung Rsoll, Sollbildschärfe Csoll, Sollreinheit Msoll, und/oder Offset-Korrektur Osoll berücksichtigt werden sollen, und falls ja, mit welcher hierarchischen Gewichtung einzelne Vorgaben zu berücksichtigen sind.

Die Erfindung betrifft ein Verfahren zur betriebsoptimierten Ansteuerung einer Ablenkeinheit 2 für ein Leuchtmodul 1, wobei das Leuchtmodul 1 zur Abstrahlung einer segmentierten Lichtverteilung eingerichtet ist, wobei das Leuchtmodul 1 die Ablenkeinheit 2 umfasst, mit der eine native Auflösung des Leuchtmoduls durch zumindest zeitweise Strahlablenkung mittels der Ablenkeinheit 2 visuell erhöht werden kann, wobei das Verfahren die folgenden Schritte umfasst:

a) Empfangen eines Sollbetriebssignals 2_ss, wobei das Sollbetriebssignal 2_ss Informationen zu zumindest einem der folgenden Kriterien enthält: Sollenergieeffizienz Esoll; Solltemperatur Tsoll; Sollbildauflösung Rsoll; Sollbildschärfe Csoll; Sollreinheit Msoll; Offset-Korrektur Osoll; und b) Sollbetriebssignalabhängige Manipulation einer Steuergröße 2_s der Ablenkeinheit 2, wobei das Ausmaß als auch der zeitliche Vorgang der Ablenkung durch die Ablenkeinheit 2 in Abhängigkeit von der Steuergröße 2_s erfolgt, wobei hierzu zumindest zwei der folgenden, durch die Steuergröße 2_s vorgegebenen Aspekte der Ablenkung, in Höhe und/oder Zeitdauer manipuliert werden: Amplitude 2_A_ist; Nulllage 2_0_ist; zeitliche Änderungsrate 2_dt_ist; Signalgrundform 2_F_ist; Zeitdauer zwischen den Nulllagendurchgängen 2_tp_ist.

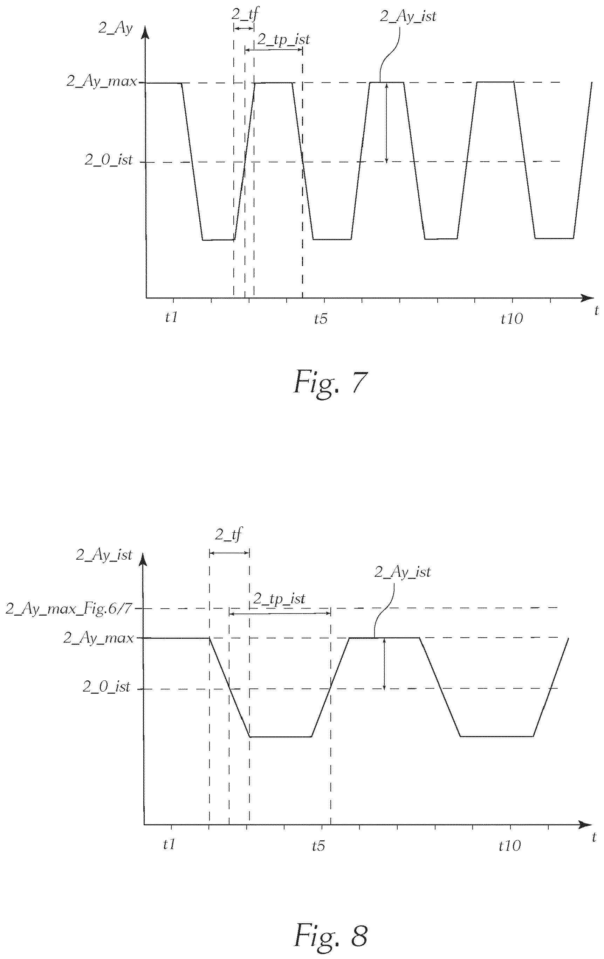

Figur 6 zeigt eine Darstellung eines ersten zeitlichen Verlaufes von Auslenkungen einer Ablenkeinheit 2. Genauer gesagt ist darin (sowie in den Figuren 7 und 8) der zeitliche Verlauf der Auslenkung 2_Ay_ist im Zuge einer Drehung der Glasplatte 2a um die y-Achse zu sehen. All das für die Auslenkung um die y-Achse Gesagte kann natürlich in analoger Weise im Falle einer alleinigen oder zusätzlichen Auslenkung um die z-Achse erfolgen.

Die Drehung kann z.B. wenige zehntel Grad bis wenige Grad betragen. Die Auslenkung bzw. die Amplitude der Auslenkung kann dabei z.B. einen Maximalwert 2_Ay_max annehmen, wie dies in Fig. 6 und 7 gezeigt ist. In Fig. 8 hingegen wird dieser der Maximalwert 2_Ay_max der Ablenkung reduziert, wie anhand eines Vergleichs mit dem ebenso in Fig. 8 dargestellten Wert 2_Ay_max_Fig.6/7 erkennbar ist.

Insbesondere kann vorgesehen sein, dass zum Erreichen einer aus dem Sollbetriebssignal 2_ss gemäß Schritt a) abgeleiteten Sollenergieeffizienz Esoll die Zeitdauer 2_tp_ist zwischen den Nulldurchgängen manipuliert wird, und zwar so, dass in jenem Fall, in dem eine Istenergieeffizienz Eist der Ablenkeinheit 2 die Sollenergieeffizienz Esoll unterschreitet, die Zeitdauer zwischen den Nulllagendurchgängen 2_tp_ist erhöht wird. Je höherfrequent die Ablenkeinheit angesteuert wird, desto höher ist der Energieverbrauch und die Energieeffizienz sinkt. Die Verringerung der Frequenz ermöglich ein sparsameren Betrieb des Leuchtmoduls 1, was erneut zum Einsparen von Energie und Erhöhung der Lebensdauer des Aktuators bzw. der Spulen 2b beiträgt. Dabei kann die Sollenergieeffizienz Esoll dergestalt vorgegeben werden, dass diese in Abhängigkeit von einer erfassten Fahrgeschwindigkeit Vist eines das Leuchtmodul 1 mitsamt der Ablenkeinheit 2 umfassenden Fahrzeugs bestimmt wird, und zwar so, dass mit abnehmender Fahrgeschwindigkeit die geforderte Sollenergieeffizienz zunimmt. Fig. 7 zeigt eine Variante, in der die Zeitdauer 2_tp_ist zwischen den Nulllagendurchgängen im Vergleich zu Fig. 6 gesenkt wurde. Konkret wurde dabei sowohl die Frequenz der Ablenkung als auch die Flankensteilheit zwischen den zu erreichenden Auslenkungspositionen 2_Ay_max bzw. -2Ay_max erhöht. Eine Flankenzeitdauer 2_tf wurde daher in Fig. 7 gegenüber Fig. 6 ebenso verkürzt. Die Abstrahlung von Licht durch die Lichtquellen 4 kann so getaktet werden, dass diese nur in der Zeitdauer zwischen den Flanken, also außerhalb von 2_tf erfolgt. Auf diese Weise kann z.B. die Schärfe der Abbildung weiter erhöht werden, da ein Verwischen der Abstrahlung vermieden wird.

Weiters kann vorgesehen sein, dass zum Erreichen einer aus dem Sollbetriebssignal 2_ss gemäß Schritt a) abgeleiteten Solltemperatur Tsoll die Zeitdauer tp zwischen den Nulldurchgängen manipuliert wird, und zwar so, dass in jenem Fall, in dem eine Isttemperatur Tist der Ablenkeinheit 2 oder des Leuchtmoduls 1 eine Solltemperatur Tsoll überschreitet, die Zeitdauer 2_tp_ist zwischen den Nulllagendurchgängen erhöht wird.

Weiters kann vorgesehen sein, dass zum Erreichen einer aus dem Sollbetriebssignal 2_ss gemäß Schritt a) abgeleiteten Sollbildschärfe Csoll die Amplitude 2_A_ist der Ablenkung manipuliert wird, und zwar so, dass bei Vorgabe maximaler Schärfe eine maximale Amplitude 2_A_max vorgegeben wird, und mit abnehmender Sollbildschärfe die Amplitude 2_A_ist reduziert wird.

Zudem kann vorgesehen sein, dass zum Erreichen einer aus dem Sollbetriebssignal 2_ss gemäß Schritt a abgeleiteten Sollbildauflösung Rsoll die Amplitude 2_A_ist der Ablenkung manipuliert wird, und zwar so, dass bei Vorgabe maximaler Sollbildauflösung eine maximale Amplitude 2_A_max vorgegeben wird, und mit abnehmender Sollbildauflösung die Amplitude 2_A_ist reduziert wird.

Weiters kann vorgesehen sein, dass zum Erreichen einer aus dem Sollbetriebssignal 2_ss gemäß Schritt a abgeleiteten Sollenergieeffizienz Esoll die Amplitude 2_A_ist der Ablenkung manipuliert wird, und zwar so, dass in jenem Fall, in dem eine Istenergieeffizienz Eist der Ablenkeinheit 2 die Sollenergieeffizienz unterschreitet, die Amplitude 2_A_ist der Ablenkung reduziert wird.

Insbesondere kann vorgesehen sein, dass zum Erzielen einer aus dem Sollbetriebssignal 2_ss gemäß Schritt a abgeleiteten Offset-Korrektur die Nulllage 2_0_ist der Ablenkung manipuliert wird.

Weiters kann vorgesehen sein, dass zum Erreichen einer aus dem Sollbetriebssignal 2_ss gemäß Schritt a abgeleiteten Sollbildschärfe Csoll die zeitliche Änderungsrate 2_dt_ist die Ablenkung manipuliert wird, und zwar so, dass in jenem Fall, in dem eine Istbildschärfe Cist der Ablenkeinheit 2 die Sollbildschärfe Csoll unterschreitet, die zeitliche Änderungsrate 2_dt_ist der Ablenkung erhöht wird. Von dieser Erhöhung der zeitlichen Änderungsrate kann z.B. ausschließlich die Zeitdauer der Flanken 2_tf vorgesehen sein. So können z.B. durch steilere Flanke die Endpositionen 2_Ay_max bei gleichbleibender Frequenz länger gehalten. Die Umsetzung steilerer Flanken geht in der Regel mit höheren elektromechanischen Anforderungen bzw. Belastungen an die Ablenkeinheit 2 einher. Anders ausgedrückt, bedeutet dieser Aspekt daher nicht zwingend eine Frequenzerhöhung, sondern es können einfach steilere Flanken zwischen zwei Endpositionen vorgesehen sein. Je schneller die Aktuatorbewegung hin zu den gewünschten Positionen durchgeführt wird, umso schärfer wird das Bild, je langsamer die gewünschte Position erreicht wird, umso mehr werden die Übergänge zwischen dem ersten Frame und dem zweiten Frame miteinander "vermischt".

Insbesondere kann vorgesehen sein, dass zum Erreichen einer aus dem Sollbetriebssignal 2_ss gemäß Schritt a abgeleiteten Sollreinheit M_soll der Ablenkeinheit 2 die zeitliche Änderungsrate 2_dt_ist der Ablenkung manipuliert wird, und zwar so, dass bei Unterschreiten einer Sollreinheit M_soll die zeitliche Änderungsrate 2_dt_ist der Ablenkung zumindest vorübergehend erhöht wird.

Die Erfindung betrifft weiters ein Leuchtmodul 1 für eine Kraftfahrzeugleuchte, wobei das Leuchtmodul 1 zur Abstrahlung einer segmentierten Lichtverteilung eingerichtet ist, wobei das Leuchtmodul 1 eine Ablenkeinheit 2 umfasst, mit der eine native Auflösung des Leuchtmoduls 1 durch zumindest zeitweise Strahlablenkung mittels der Ablenkeinheit 2 visuell erhöht werden kann, wobei das Leuchtmodul 1 zur Umsetzung des erfindungsgemäßen Verfahrens eingerichtet ist. Natürlich kann das Leuchtmodul 1 Komponenten wie z.B. die genannte Steuereinheit 7, die Lichtquelle 4, das optische Bauelement 6, etwaige Projektionsoptiken etc. umfassen.

Die Erfindung ist nicht auf die gezeigten Ausführungsformen beschränkt, sondern durch den gesamten Schutzumfang der Ansprüche definiert. Auch können einzelne Aspekte der Erfindung bzw. der Ausführungsformen aufgegriffen und miteinander kombiniert werden. Etwaige Bezugszeichen in den Ansprüchen sind beispielhaft und dienen nur der einfacheren Lesbarkeit der Ansprüche, ohne diese einzuschränken.

## Patentansprüche

1. Verfahren zur betriebsoptimierten Ansteuerung einer Ablenkeinheit (2) für ein Leuchtmodul (1), wobei das Leuchtmodul (1) zur Abstrahlung einer segmentierten Lichtverteilung eingerichtet ist, wobei das Leuchtmodul (1) die Ablenkeinheit (2) umfasst, mit der eine native Auflösung des Leuchtmoduls () durch zumindest zeitweise Strahlablenkung mittels der Ablenkeinheit (2) visuell erhöht werden kann, wobei das Verfahren die folgenden Schritte umfasst:
a) Empfangen eines Sollbetriebssignals (2_ss), wobei das Sollbetriebssignal (2_ss) Informationen zu zumindest einem der folgenden Kriterien enthält: Sollenergieeffizienz (Esoll); Solltemperatur (Tsoll); Sollbildauflösung (Rsoll); Sollbildschärfe (Csoll); Sollreinheit (Msoll); Offset-Korrektur (Osoll);
b) Sollbetriebssignalabhängige Manipulation einer Steuergröße (2_s) der Ablenkeinheit (2), wobei das Ausmaß als auch der zeitliche Vorgang der Ablenkung durch die Ablenkeinheit (2) in Abhängigkeit von der Steuergröße (2_s) erfolgt, wobei hierzu zumindest zwei der folgenden, durch die Steuergröße (2_s) vorgegebenen Aspekte der Ablenkung, in Höhe und/oder Zeitdauer manipuliert werden: Amplitude (2_A_ist); Nulllage (2_0_ist); zeitliche Änderungsrate (2_dt_ist); Zeitdauer zwischen den Nulllagendurchgängen (2_tp_ist)).

2. Verfahren nach Anspruch 1, wobei zum Erreichen einer aus dem Sollbetriebssignal (2_ss) gemäß Schritt a) abgeleiteten Sollenergieeffizienz (Esoll) die Zeitdauer (2_tp_ist) zwischen den Nulldurchgängen manipuliert wird, und zwar so, dass in jenem Fall, in dem eine Istenergieeffizienz (Eist) der Ablenkeinheit (2) die Sollenergieeffizienz (Esoll) unterschreitet, die Zeitdauer zwischen den Nulllagendurchgängen (2_tp_ist) erhöht wird.

3. Verfahren nach Anspruch 2, wobei die Sollenergieeffizienz (Esoll) dergestalt vorgegeben wird, dass diese in Abhängigkeit von einer erfassten Fahrgeschwindigkeit (Vist) eines das Leuchtmodul (1) mitsamt der Ablenkeinheit (2) umfassenden Fahrzeugs bestimmt wird, und zwar so, dass mit abnehmender Fahrgeschwindigkeit die geforderte Sollenergieeffizienz zunimmt.

4. Verfahren nach einem der vorhergehenden Ansprüche, wobei zum Erreichen einer aus dem Sollbetriebssignal (2_ss) gemäß Schritt a) abgeleiteten Solltemperatur (Tsoll) die Zeitdauer (2_tp_ist) zwischen den Nulldurchgängen manipuliert wird, und zwar so, dass in jenem Fall, in dem eine Isttemperatur (Tist) der Ablenkeinheit (2) oder des Leuchtmoduls (1) eine Solltemperatur (Tsoll) überschreitet, die Zeitdauer (2_tp_ist) zwischen den Nulllagendurchgängen erhöht wird.

5. Verfahren nach einem der vorhergehenden Ansprüche, wobei zum Erreichen einer aus dem Sollbetriebssignal (2_ss) gemäß Schritt a) abgeleiteten Sollbildschärfe (Csoll) die Amplitude (2_A_ist) der Ablenkung manipuliert wird, und zwar so, dass bei Vorgabe maximaler Schärfe eine maximale Amplitude (2_Ay_max, 2_Az_max) vorgegeben wird, und mit abnehmender Sollbildschärfe die Amplitude (2_A_ist) reduziert wird.

6. Verfahren nach einem der vorhergehenden Ansprüche, wobei zum Erreichen einer aus dem Sollbetriebssignal (2_ss) gemäß Schritt a) abgeleiteten Sollbildauflösung (Rsoll) die Amplitude (2_A_ist) der Ablenkung manipuliert wird, und zwar so, dass bei Vorgabe maximaler Sollbildauflösung eine maximale Amplitude (2_A_max) vorgegeben wird, und mit abnehmender Sollbildauflösung die Amplitude (2_A_ist) reduziert wird.

7. Verfahren nach Anspruch 5 oder 6, wobei die Segmentierung der Lichtverteilung durch einzeln ansteuerbare Leuchtpixel (3) realisiert ist, die in einer Matrix mit einer Auflösung von zumindest zwei Zeilen und zwei Spalten weitgehend lückenlos nebeneinander angeordnet sind, wobei die maximale Amplitude der Ablenkung so gewählt ist, dass im Vergleich zu einem nicht abgelenkten Referenzzustand (P0) der abgelenkte Zustand (P1) einen vertikalen sowie einen horizontalen Versatz um eine halbe Pixelbreite aufweist, sodass bei Vorliegen der maximalen Amplitude der Ablenkung - abgesehen von Randpixeln - jedes abgelenkte Leuchtpixel (3) mit vier nichtabgelenkten Leuchtpixeln räumlich zu je 25% überlappt.

8. Verfahren nach einem der vorhergehenden Ansprüche, wobei die Ablenkeinheit (2) eine neutrale Stellung (Pn) aufweist, in der die Ablenkeinheit (2) im Falle eines Ausfalles einer Stromversorgung der Ablenkeinheit (2) oder einer zur Steuerung der Ablenkeinheit (2) vorgesehenen Steuergröße (2_s) automatisch einnimmt.

9. Verfahren nach einem der vorhergehenden Ansprüche, wobei zum Erreichen einer aus dem Sollbetriebssignal (2_ss) gemäß Schritt a) abgeleiteten Sollenergieeffizienz (Esoll) die Amplitude (2_A_ist) der Ablenkung manipuliert wird, und zwar so, dass in jenem Fall, in dem eine Istenergieeffizienz (Eist) der Ablenkeinheit (2) die Sollenergieeffizienz unterschreitet, die Amplitude (2_A_ist) der Ablenkung reduziert wird.

10. Verfahren nach einem der vorhergehenden Ansprüche, wobei zum Erzielen einer aus dem Sollbetriebssignal (2_ss) gemäß Schritt a) abgeleiteten Offset-Korrektur die Nulllage (2_0_ist) der Ablenkung manipuliert wird.

11. Verfahren nach einem der vorhergehenden Ansprüche, wobei zum Erreichen einer aus dem Sollbetriebssignal (2_ss) gemäß Schritt a) abgeleiteten Sollbildschärfe (Csoll) die zeitliche Änderungsrate (2_dt_ist) der Ablenkung manipuliert wird, und zwar so, dass in jenem Fall, in dem eine Istbildschärfe (Cist) der Ablenkeinheit (2) die Sollbildschärfe (Csoll) unterschreitet, die zeitliche Änderungsrate (2_dt_ist) der Ablenkung erhöht wird.

12. Verfahren nach einem der vorhergehenden Ansprüche, wobei zum Erreichen einer aus dem Sollbetriebssignal (2_ss) gemäß Schritt a) abgeleiteten Sollreinheit (M_soll) der Ablenkeinheit (2) die zeitliche Änderungsrate (2_dt) der Ablenkung manipuliert wird, und zwar so, dass bei Unterschreiten einer Sollreinheit (M_soll) die zeitliche Änderungsrate (2_dt) der Ablenkung zumindest vorübergehend erhöht wird.

13. Verfahren nach einem der vorhergehenden Ansprüche, wobei die Ablenkeinheit (2) eine Glasplatte (2a) umfasst, die um zumindest eine, vorzugsweise genau eine Achse (y) oder genau zwei Achse (y,z) verschwenkbar oder verschiebbar ausgebildet ist.

14. Verfahren nach Anspruch 13, wobei die Glasplatte (2a) eine plane Lichteintrittsfläche (2a') und eine hierzu planparallele Lichtaustrittsfläche (2a") aufweist, wobei die Ablenkeinheit (2) je Achse, um die die Glasplatte (2a) verschwenkbar ist, zumindest eine elektrische Spule (2b) aufweist, wobei auf der Glasplatte (2a) für jede Spule (2b) je ein Mittel (2c) zur magnetischen Kopplung mit der jeweiligen Spule (2b) angeordnet ist, sodass durch Bestromung der jeweiligen Spule (2b) eine Kraft auf das zugehörige Mittel (2c) ausübbar ist, und zwar so, dass die Glasplatte (2a) in Abhängigkeit von der Bestromung der Spule (2b) um die jeweilige Achse (y,z) geschwenkt wird.

15. Verfahren nach Anspruch 14, wobei die Ablenkeinheit (2) zudem je Achse (y,z), um die die Glasplatte (2a) verschwenkbar ist, ein mechanisches Rückstellelement (2d), insbesondere ein Federelement, zur Rückstellung der Glasplatte (2a) in eine neutrale Stellung (Pn) aufweist, die die Glasplatte (2a) im Falle eines Ausfalles einer Stromversorgung der Ablenkeinheit (2) oder einer zur Steuerung der Ablenkeinheit (2) vorgesehenen Steuergröße (2_s) automatisch einnimmt.

16. Leuchtmodul (1) für eine Kraftfahrzeugleuchte, wobei das Leuchtmodul (1) zur Abstrahlung einer segmentierten Lichtverteilung eingerichtet ist, wobei das Leuchtmodul (1) eine Ablenkeinheit (2) umfasst, mit der eine visuell wahrnehmbare Auflösung der vom Leuchtmodul (1) erzeugten Lichtverteilung gegenüber der nativen Lichtverteilung des Leuchtmoduls (1) erhöht werden kann, wobei das Leuchtmodul (1) zur Umsetzung des Verfahrens nach einem der vorhergehenden Ansprüche eingerichtet ist.
